# EUROPEAN PATENT APPLICATION

(11) **EP 4 841 318 A1**
(43) Date of publication of application: **18.11.2026**
(21) Application number: 25175689.6
(22) Date of filing: 12.05.2025
(51) Int. Cl.: G02B 6/30, G02B 6/13, G02B 6/42, G02B 6/136

(54) **OPTICAL COUPLING STRUCTURE AND METHOD FOR FORMING THE SAME**

(71) Applicant: Universität Heidelberg, 69117 Heidelberg (DE)
(72) Inventor: PERNICE, Wolfram, 69117 Heidelberg (DE); WENDLAND, Daniel, 69117 Heidelberg (DE)
(74) Representative: Vossius & Partner Patentanwälte Rechtsanwälte mbB

(57) **Abstract**

An optical coupling structure, comprising: a substrate having a front surface and a back surface; a buffer layer disposed on the front surface of the substrate; and a waveguide and an optical coupler, both disposed on the buffer layer; wherein the substrate comprises an opening extending from the back surface to the front surface, the opening being at a position corresponding to the optical coupler, the optical coupling structure further comprises an optical fiber positioned within the opening, such that a facet of the optical fiber faces the optical coupler, and the optical coupler comprises a reflective surface for redirecting incident light from the optical fiber toward the waveguide by reflection.

## Description

The present invention relates to an optical coupling structure and a method for forming the same and, more specifically, to optical coupling from an optical fiber to integrated photonic components on a chip.

Efficient optical fiber-to-chip coupling is essential for photonic integration, but existing methods present trade-offs in terms of efficiency, bandwidth and mechanical stability. Among the most effective approaches are side couplers, which provide high efficiency and broad bandwidth. However, they are limited to the edges of the chip, restricting the number of possible optical connections. This limitation makes them less suitable for densely integrated photonic circuits where multiple optical inputs and outputs are required.

An alternative approach is the use of grating couplers, which enable out-of-plane coupling by directing light out of the chip plane. This method allows optical connections to be made at virtually any position on the chip, increasing the potential for photonic integration. Despite this advantage, grating couplers have inherent drawbacks. Their efficiency is often lower than that of side couplers, and they support only a narrow optical bandwidth due to their dependence on periodic grating structures. Moreover, out-of-plane coupling above the chip competes for space with essential interconnects such as electrical wire bonds and flip-chip bonding of subsystems. It is also difficult to create a stable connection to fibers on the top of the chip, especially since the contact area with the fibers is very small, as is the amount of glue that can be applied without affecting other elements on the chip.

Total internal reflection couplers provide a promising alternative, as they are not restricted by the bandwidth limitations of grating couplers and can achieve high efficiency. However, like grating couplers, they require space on the top of the chip for fiber attachment, reducing the area available for electrical connections. Additionally, both grating couplers and total internal reflection couplers necessitate active fiber alignment, which increases assembly time and introduces the risk of damaging the coupling structure during alignment. As discussed, the mechanical stability of top-mounted optical connections is also a concern, as they offer limited contact area and are susceptible to misalignment or detachment over time.

While side couplers, grating couplers and total internal reflection couplers each offer advantages, they also introduce significant challenges related to bandwidth, efficiency, alignment complexity and mechanical stability. An optimal fiber-to-chip coupling solution must address these limitations by ensuring high optical performance while minimizing space consumption, reducing alignment effort and enhancing mechanical robustness.

The present invention provides a method for forming an optical coupling structure and the corresponding optical coupling structure itself, effectively addressing the previously discussed technical problems.

In a first aspect, the present invention concerns a method for forming an optical coupling structure, the method comprising the following steps.

In a first step, a substrate is provided, the substrate having a front surface and a back surface, and a buffer layer is disposed on the front surface of the substrate.

Preferably, the substrate comprises silicon, glass (SiO₂), silicon carbide (SiC) or diamond. Preferably, the buffer layer comprises silicon oxide (SiO₂), which is preferably thermally grown from the substrate.

Preferably, a waveguide material layer is further provided on the buffer layer. The waveguide material layer preferably comprises silicon nitride (Si₃N₄), thin film lithium niobate, thin film barium titanate, silicon, silicon carbide, diamond and/or tantalum pentoxide (TaO).

In a second step, an opening is formed in the substrate, the opening extending from the back surface to the front surface; namely, the opening extends throughout the substrate, preferably along its thickness direction.

Preferably, the opening is formed by etching such as cryogenic etching and/or by lithography such as electron-beam lithography. More preferably, lithography is performed to open up holes in a resist, followed by etching to form the openings.

Preferably, forming the opening comprises the following two steps. First, a first opening is formed in the substrate, the first opening extending from the back surface to the front surface; namely, the first opening extends throughout the substrate, preferably along its thickness direction. Secondly, a portion of the substrate surrounding the first opening is removed from the back surface, thereby widening the first opening only partially along its length to form a step by a remaining portion of the substrate between the buffer layer and the widened opening.

Preferably, a height of the step is less than or equal to 100 µm, more preferably less than or equal to 50 µm and even more preferably less than or equal to 10 µm. The height of the step preferably has a minimum value of 1, 2 or 3 µm. The step ensures a fixed, non-zero distance between the fiber facet and the buffer layer, effectively minimizing alignment tolerances and enhancing the system's reliability and efficiency.

Preferably, the cross-section of the opening-taken, e.g., orthogonal to the opening's extending direction-is circular or polygonal, more preferably quadratic. For subsequent gluing discussed below, a polygonal cross-section is beneficial as it provides space for excess adhesive to escape.

In a third step, a waveguide and an optical coupler are formed on the buffer layer.

Preferably, forming the waveguide comprises structuring the waveguide material layer. Preferably, the waveguide is formed by lithography, such as electron-beam lithography. Preferably, in the lithography a photoresist layer is formed by spin coating.

The optical coupler is formed at a position corresponding to the opening. Preferably, the optical coupler is positioned in optical alignment with the opening.

Preferably, the optical coupler comprises a polymer such as a photoresist material. Examples of the photoresist material include those identified in "Optical properties of photoresists for femtosecond 3D printing: refractive index, extinction, luminescence-dose dependence, aging, heat treatment and comparison between 1-photon and 2-photon exposure", Schmid et al., Optical Materials Express Vol. 9, Issue 12, pp. 4564-4577 (2019), https://doi.org/10.1364/OME.9.004564. Specifically, the photoresist materials include IP-S, IP-Dip, IP-L, and IP-Visio - photoresists manufactured by Nanoscribe GmbH and OrmoComp-a hybrid organic-inorganic polymer (ORMOCER^{®}) developed by micro resist technology GmbH.

Preferably, the optical coupler is formed by direct laser writing or an imprint process.

In a fourth step, an optical fiber is positioned within the opening such that a facet of the optical fiber faces the optical coupler. The optical coupler comprises a reflective surface for redirecting incident light from the optical fiber toward the waveguide by reflection.

The facet of an optical fiber refers to an end face of the fiber where light enters or exits.

Preferably, the aforementioned optical alignment between the optical coupler and the opening ensures that the reflective surface is inclined relative to a propagation direction of incident light from the optical coupler.

Preferably, the reflective surface is configured to redirect the incident light from the optical fiber toward the waveguide by total internal reflection (TIR). Alternatively, the reflective surface includes a reflective coating configured to redirect the incident light from the optical fiber toward the waveguide.

Preferably, the reflective coating comprises metal, preferably gold, silver and/or aluminum.

The reflective surface may be planar or, if it includes the reflective coating, may feature a convex or concave portion. The ability to reshape the reflective surface enhances coupling efficiency and enables more versatile outgoing beam shapes.

Preferably, positioning the optical fiber within the opening comprises inserting the optical fiber into the opening until its facet abuts the buffer layer or, if a step is formed, until it abuts the step.

Preferably, the method according to the invention further comprises fixing the optical fiber with a glue.

Preferably, glue is filled between the optical fiber and the substrate, specifically between the side surface of the optical fiber and the substrate. Glue may additionally or alternatively be filled between the optical fiber and the buffer layer, namely in the space defined by the step. Furthermore, glue may additionally or alternatively be applied on the back surface of the substrate, specifically between the back surface of the substrate and the side surface of the optical fiber.

Preferably, the method according to the invention further comprises forming a focusing lens in the opening before the fourth step, namely, before positioning the optical fiber within the opening. The focusing lens is preferably formed on a back surface of the buffer layer.

Preferably, the focusing lens has a concave, biconcave or biconvex geometry.

In a second aspect, the present invention concerns an optical coupling structure. The optical coupling structure comprises a substrate having a front surface and a back surface, a buffer layer disposed on the front surface of the substrate as well as a waveguide and an optical coupler, both disposed on the buffer layer. The substrate comprises an opening extending from the back surface to the front surface, the opening being at a position corresponding to the optical coupler. The optical coupling structure further comprises an optical fiber positioned within the opening, such that a facet of the optical fiber faces the optical coupler. The optical coupler comprises a reflective surface for redirecting incident light from the optical fiber toward the waveguide by reflection.

Where applicable, the features described in relation to the first aspect of the invention also apply to the second aspect, including those concerning the substrate, buffer layer, waveguide and waveguide material layer, opening, optical coupler, optical fiber, glue and focusing lens.

Preferably, the opening comprises a first section and a second section arranged sequentially from the front surface to the back surface of the substrate. The first section has a first dimension, preferably a first diameter (for a circular cross-section) or a first width (for a polygonal cross-section), measured orthogonal to the substrate's thickness direction. Similarly, the second section has a second dimension, preferably a second diameter (for a circular cross-section) or a second width (for a polygonal cross-section), which is greater than the first dimension and is likewise measured orthogonal to the substrate's thickness direction.

Preferably, the optical fiber has a fiber diameter greater than the first dimension and less than or equal to the second dimension.

Preferably, a height of the first section is less than or equal to 100 µm, more preferably less than or equal to 50 µm and even more preferably less than or equal to 10 µm. The height preferably has a minimum value of 1, 2 or 3 µm. This height may correspond to the height of the step described above.

The invention enables automated fiber-to-coupler alignment, accelerating the packaging and testing of photonic integrated circuits. Fixing fibers to the backside of the chip prevents adhesive contamination, enhancing reliability and efficiency.

The accompanying drawings illustrate various embodiments of the invention and, together with the detailed description, serve to provide a better understanding of the technical features and advantages of the disclosed subject-matter. The drawings are not necessarily to scale, and certain features may be exaggerated or omitted for clarity.
Figs. 1a-1h illustrate a process of manufacturing an optical coupling structure according to the invention.
Figs. 2a-2e illustrate an alternative process of manufacturing an optical coupling structure according to the invention.

The following detailed description provides exemplary embodiments of the invention to enable those skilled in the art to practice the disclosed subject-matter. While specific configurations, materials, and process steps may be described, it will be understood that these are provided for illustrative purposes only and do not limit the scope of the invention. Variations and modifications may be made without departing from the scope of the claims. Unless explicitly stated otherwise, singular terms may include plural variations, and vice versa. The terms "comprise", "include" and "have" are used in an open-ended sense, meaning that additional elements or steps may be present. However, when the term "comprise" is used in reference to a material, it is to be understood that the associated subject may include it as a component alongside other elements ("open-ended sense") or consist entirely of that material. Reference signs in the drawings are used consistently to denote similar components across different embodiments.

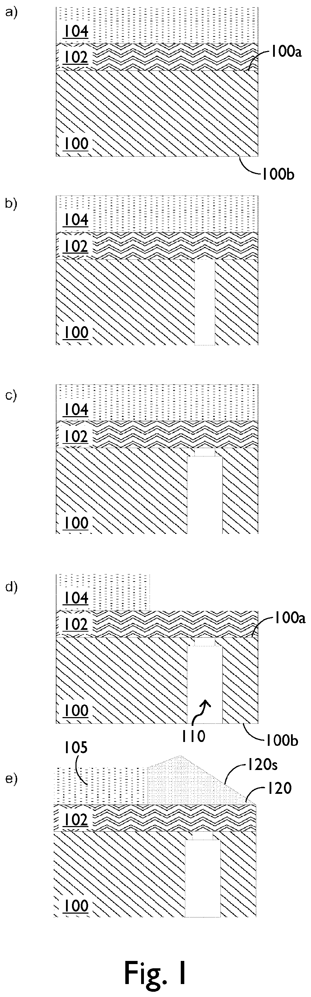

The present invention concerns a method for forming an optical coupling structure, a preferred embodiment of which is shown in Figs. 1a-1h. The preferred method comprises the following steps.

In a first step (Fig. 1a), a substrate 100 is provided, the substrate 100 having a front surface 100a and a back surface 100b, and a buffer layer 102 is disposed on the front surface 100a of the substrate 100.

Specifically, in the illustrated embodiment, the core system consists of three layers. At the base is the substrate layer 100, which primarily provides mechanical stability and comprises, for example, silicon. Above it is the buffer layer 102, comprising SiO₂ or a similar material with a lower refractive index, serving as a separation between the substrate 100 and the topmost waveguide material layer 104. The waveguide material layer 104 consists of a waveguiding material, such as Si₃N₄.

In a second step as shown in Figs. 1b-1d, an opening 110 is formed in the substrate 100, extending from the back surface 100b to the front surface 100a and passing entirely through the substrate 100.

Specifically, to structure the underside of the substrate 100, a photoresist or electron beam resist (not shown) is applied via spin-coating. This resist is then exposed using the appropriate lithographic technique to define the desired pattern. After exposure, the resist is developed as usual, and the substrate is etched using cryogenic etching and/or wet etching. This process creates holes that extend through the entire substrate, stopping at the buffer layer 102 due to its significantly lower etch rate (Fig. 1b).

To protect the facet of the optical fiber, a second etching step is preferably performed at the same position as the first hole but with a larger diameter. Unlike the first etch, this step does not penetrate completely through the substrate 100. Instead, the etching process is halted just before reaching the buffer layer 102, forming a stepped profile, as illustrated (Fig. 1c). The (optional) step-like structure serves as a mechanical stop for the optical fiber during assembly, ensuring precise positioning and stability.

In a third step, a waveguide 105 and an optical coupler 120 are formed on the buffer layer 102 (Fig. 1e).

Once the underside structuring is completed, the top side, which contains the waveguide structures, is processed based on a known PIC fabrication process. Due to the small feature sizes required, electron beam lithography is necessary for patterning this layer (Figs. 1d-1e). The waveguide design is flexible, but at the coupling interfaces, it must allow a smooth transition to the subsequent three-dimensional structure, which is typically achieved using inverse tapers (further described below).

After waveguide structuring, a three-dimensional optical coupler 120 can be fabricated via direct laser lithography. The optical coupler 120 is designed so that incoming light from the optical fiber first encounters an inclined interface-the reflective surface 120s-which is angled to exceed the critical angle for total internal reflection (TIR). This ensures that all incident light is efficiently reflected, achieving high coupling efficiency. After reflection, the light is directed into the waveguide structures 105, where it is further guided within the photonic circuit. To enhance efficiency, the transition to the waveguide 105 is facilitated by adiabatic tapers, allowing optimal coupling into single-mode waveguides with minimal losses.

The waveguide 105 terminates in inverse tapers, where the waveguide width is reduced to a point where it no longer supports a mode. At this transition, the waveguide 105 is embedded within the coupler material, from which the optical coupler 120 is formed.

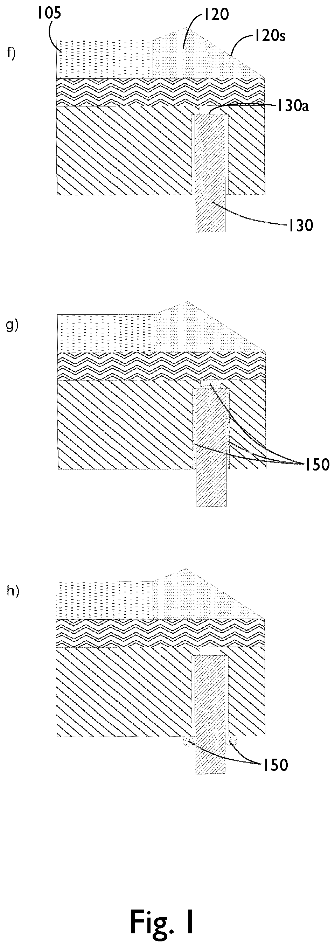

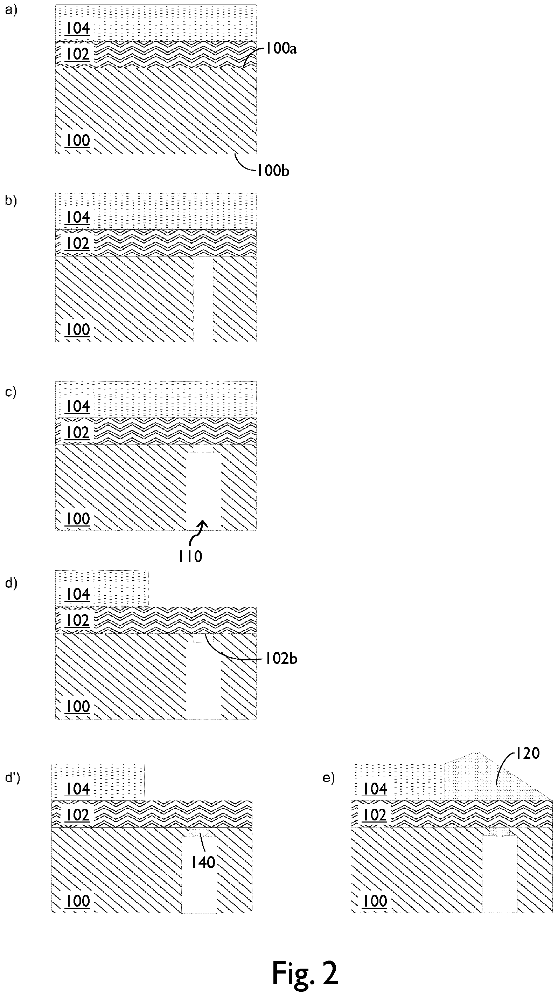

From this point, a gradually widening taper is integrated, allowing for mode expansion. Once the mode is sufficiently enlarged, it encounters the reflective surface 120s, which may be curved or flat. The reflected light is then directed downward toward the optical fiber 130 (described later with reference to Figs. 1f-1h), where it is either further shaped by a lens 140 (described later with reference to Figs. 2e-f) or directly coupled to the fiber 130 for efficient transmission.

In a fourth step, the optical fiber 130 is positioned within the opening 110 such that a facet 130a of the optical fiber faces the optical coupler 120 (Fig. 1f). The optical coupler 120 comprises the reflective surface 120s for redirecting incident light from the optical fiber toward the waveguide 105 by reflection, specifically by total internal reflection in this embodiment.

Inserting the optical fiber 130 into the pre-etched opening 110 on the backside of the substrate 100 ensures both environmental shielding and precise alignment with the structures on the top side.

There are two preferred methods for securing the optical fiber 130. In one approach, adhesive (glue) 150 can be applied inside the opening 110 before inserting the optical fiber 130 (Fig. 1g). In this case, the adhesive 150 must be optically transparent and can serve as an immersion medium to enhance optical performance.

For applications where this is not desirable, such as cryogenic environments or cases of wavelength incompatibility, an alternative method involves applying adhesive 150 only on the backside of the substrate 110 to fix the optical fiber 130 in place without affecting the optical interface (Fig. 1h).

Figs. 2a-2e illustrate an alternative process of manufacturing an optical coupling structure, where the steps shown in Figs. 2a, 2b, 2c, 2d and 2e are essentially the same as those described in relation to Figs. 1a, 1b, 1c, 1d and 1e, respectively. The difference lies in that in this process, before positioning an optical fiber within the opening 110, a focusing lens 140 is formed in the opening 110, on a back side 102b of the buffer layer 102 (Fig. 2d'). While a step is shown in the opening 110 in Figs. 2c-e, it is also possible that no such step is formed.

Accordingly, the present invention provides optical coupling structures as shown in Figs. 1g and 1h. The optical coupling structure comprises the substrate 100 with the front surface 100a and the back surface 100b, the buffer layer 102 disposed on the front surface 100a of the substrate 100 as well as the waveguide 105 and the optical coupler 120, both disposed on the buffer layer 102. The substrate 100 comprises the opening 110 extending from the back surface 100b to the front surface 100a, the opening 110 being at a position corresponding to the optical coupler 120. The optical coupling structure further comprises the optical fiber 130 positioned within the opening 110, such that the facet 130a of the optical fiber 130 faces the optical coupler 120. The optical coupler 120 comprises a reflective surface 120s for redirecting incident light from the optical fiber 130 toward the waveguide 105 by reflection.

By incorporating backside etching of fiber channels, the invention enables highly automated coupling by defining a precise step at the end of the channel, ensuring a consistent fiber-to-coupler distance. This channel also fully automates alignment, eliminating the need for active alignment between the coupler and fiber. As a result, the packaging and testing processes for photonic integrated circuits (PICs) are significantly accelerated.

Additionally, since fibers are fixed to the backside of the chip, there is no risk of packaging adhesives contaminating or damaging the coupling area, further improving reliability and efficiency.

The embodiments described herein illustrate various aspects of the invention and should not be construed as limiting its scope. Modifications, equivalents, and alternative configurations may be apparent to those skilled in the art based on the disclosure provided. The invention is defined solely by the appended claims, which encompass all permissible equivalents and variations. Any reference to specific materials, dimensions, or configurations is for illustrative purposes and should not be interpreted as limiting, unless explicitly stated otherwise.

The present covers the following exemplary aspects:
1. An optical coupling structure, comprising:
   a substrate having a front surface and a back surface;
   a buffer layer disposed on the front surface of the substrate; and
   a waveguide and an optical coupler, both disposed on the buffer layer; wherein:
      the substrate comprises an opening extending from the back surface to the front surface, the opening being at a position corresponding to the optical coupler,
      the optical coupling structure further comprises an optical fiber positioned within the opening, such that a facet of the optical fiber faces the optical coupler, and
      the optical coupler comprises a reflective surface for redirecting incident light from the optical fiber toward the waveguide by reflection.
2. The optical coupling structure of aspect 1, wherein the reflective surface is inclined relative to a propagation direction of incident light from the optical coupler.
3. The optical coupling structure of aspect 1 or 2, wherein the reflective surface is configured to redirect the incident light from the optical fiber toward the waveguide by total internal reflection.
4. The optical coupling structure of aspect 1 or 2, wherein the reflective surface includes a reflective coating configured to redirect the incident light from the optical fiber toward the waveguide.
5. The optical coupling structure of any preceding aspect, wherein the opening comprises a first section and a second section disposed in sequence from the front surface to the back surface, the first section having a first dimension, preferably a first diameter, and the second section having a second dimension, preferably a second diameter, greater than the first dimension.
6. The optical coupling structure of any preceding aspect, wherein a cross section of the opening is circular or polygonal, preferably quadratic.
7. The optical coupling structure of aspect 5 or 6, wherein the optical fiber has a fiber diameter greater than the first dimension and less than or equal to the second dimension.
8. The optical coupling structure of any preceding aspect, further comprising a focusing lens within the opening, disposed between the optical fiber and the buffer layer.
9. The optical coupling structure of any preceding aspect, wherein a height of the first section is less than or equal to 100 µm, more preferably less than or equal to 50 µm and even more preferably less than or equal to 10 µm, and/or
   the height of the first section has a minimum value of 1, 2 or 3 µm.
10. The optical coupling structure of any preceding aspect, wherein the substrate comprises silicon, glass (SiO₂), silicon carbide (SiC) or diamond.
11. The optical coupling structure of any preceding aspect, wherein the buffer layer comprises silicon oxide (SiO₂).
12. The optical coupling structure of any preceding aspect, wherein the waveguide comprises silicon nitride (Si₃N₄), thin film lithium niobate, thin film barium titanate, silicon, silicon carbide, diamond and/or tantalum pentoxie (TaO).
13. The optical coupling structure of any preceding aspect, wherein the optical coupler comprises a polymer.
14. A method for forming an optical coupling structure, the method comprising:
   providing a substrate having a front surface and a back surface and a buffer layer disposed on the front surface of the substrate;
   forming an opening in the substrate, the opening extending from the back surface to the front surface;
   forming a waveguide and an optical coupler on the buffer layer, the optical coupler being formed at a position corresponding to the opening; and
   positioning an optical fiber within the opening such that a facet of the optical fiber faces the optical coupler; wherein
   the optical coupler comprises a reflective surface for redirecting incident light from the optical fiber toward the waveguide by reflection.
15. The method of aspect 14, wherein the reflective surface is inclined relative to a propagation direction of incident light from the optical coupler.
16. The method of aspect 14 or 15, wherein the reflective surface is configured to redirect the incident light from the optical fiber toward the waveguide by total internal reflection.
17. The method of aspect 14 or 15, wherein the reflective surface includes a reflective coating configured to redirect the incident light from the optical fiber toward the waveguide.
18. The method of any of aspects 14-17, wherein forming the opening comprises:
   forming a first opening in the substrate, the first opening extending from the back surface to the front surface; and
   removing a portion of the substrate surrounding the first opening from the back surface to widen the first opening, thereby forming a step by a remaining portion of the substrate between the buffer layer and the widened opening.
19. The method of aspect 18, wherein positioning the optical fiber within the opening comprises inserting the optical fiber into the opening until the output end of the optical fiber abuts the step.
20. The method of any of aspects 18 or 19, wherein a height of the step is less than or equal to 100 µm, more preferably less than or equal to 50 µm and even more preferably less than or equal to 10 µm; and/or
   a height of the step has a minimum value of 1, 2 or 3 µm.
21. The method of any of aspects 14-20, wherein a cross section of the opening is circular or polygonal, preferably quadratic.
22. The method of any of aspects 14-21, further comprising forming a focusing lens in the opening before positioning the optical fiber within the opening, the focusing lens disposed on the buffer layer.
23. The method of any of aspects 14-22, further comprising providing a waveguide material layer disposed on the buffer layer, wherein forming the waveguide comprises structuring the waveguide material layer.
24. The method of any of aspects 14-18, wherein the opening and/or the waveguide is formed by lithography, preferably electron-beam lithography.
25. The method of aspect 34, wherein in the lithography a photoresist layer is formed by spin coating.
26. The method of any of aspects 14-25, wherein the opening is formed by cryogenic etching.
27. The method of any of aspects 14-26, further comprising fixing the optical fiber with a glue.
28. The method of aspect 27, wherein the glue is filled between the optical fiber and the substrate, between the optical fiber and the buffer layer and/or on the back surface of the substrate.
29. The method of any of aspects 14-28, wherein the optical coupler is formed by direct laser writing manner or an imprint process.

### [REFERENCE SIGNS]

- 100:: substrate
- 100a:: front surface (of substrate)
- 100b:: back surface (of substrate)
- 102:: buffer layer
- 102b:: back side (of buffer layer)
- 104:: waveguide material layer
- 110:: opening
- 105:: waveguide
- 120:: optical coupler
- 120s:: reflective surface
- 130:: optical fiber
- 130a:: facet
- 140:: focusing lens
- 150:: adhesive (glue)

## Claims

1. An optical coupling structure, comprising:
a substrate having a front surface and a back surface;
a buffer layer disposed on the front surface of the substrate; and
a waveguide and an optical coupler, both disposed on the buffer layer; wherein:
the substrate comprises an opening extending from the back surface to the front surface, the opening being at a position corresponding to the optical coupler,
the optical coupling structure further comprises an optical fiber positioned within the opening, such that a facet of the optical fiber faces the optical coupler, and
the optical coupler comprises a reflective surface for redirecting incident light from the optical fiber toward the waveguide by reflection.

2. The optical coupling structure of claim 1, wherein the reflective surface is inclined relative to a propagation direction of incident light from the optical coupler and is configured to redirect the incident light from the optical fiber toward the waveguide by total internal reflection.

3. The optical coupling structure of claim 1, wherein the reflective surface is inclined relative to a propagation direction of incident light from the optical coupler and includes a reflective coating configured to redirect the incident light from the optical fiber toward the waveguide.

4. The optical coupling structure of any preceding claim, wherein the opening comprises a first section and a second section disposed in sequence from the front surface to the back surface, the first section having a first dimension and the second section having a second dimension greater than the first dimension.

5. The optical coupling structure of any preceding claim, wherein a cross section of the opening is polygonal, preferably quadratic.

6. The optical coupling structure of claim 4 or 5, wherein the optical fiber has a fiber diameter greater than the first dimension and less than or equal to the second dimension.

7. The optical coupling structure of any preceding claim, further comprising a focusing lens within the opening, disposed between the optical fiber and the buffer layer.

8. A method for forming an optical coupling structure, the method comprising:
providing a substrate having a front surface and a back surface and a buffer layer disposed on the front surface of the substrate;
forming an opening in the substrate, the opening extending from the back surface to the front surface;
forming a waveguide and an optical coupler on the buffer layer, the optical coupler being formed at a position corresponding to the opening; and
positioning an optical fiber within the opening such that a facet of the optical fiber faces the optical coupler; wherein
the optical coupler comprises a reflective surface for redirecting incident light from the optical fiber toward the waveguide by reflection.

9. The method of claim 8, wherein forming the opening comprises:
forming a first opening in the substrate, the first opening extending from the back surface to the front surface; and
removing a portion of the substrate surrounding the first opening from the back surface to widen the first opening, thereby forming a step by a remaining portion of the substrate between the buffer layer and the widened opening.

10. The method of any of claims 8-9, further comprising forming a focusing lens in the opening before positioning the optical fiber within the opening, the focusing lens disposed on the buffer layer.

11. The method of any of claims 8-10, further comprising providing a waveguide material layer disposed on the buffer layer, wherein forming the waveguide comprises structuring the waveguide material layer.

12. The method of any of claims 8-11, wherein the opening is formed by cryogenic etching.

13. The method of any of claims 8-12, further comprising fixing the optical fiber with a glue.

14. The method of claim 13, wherein the glue is filled between the optical fiber and the substrate, between the optical fiber and the buffer layer and/or on the back surface of the substrate.

15. The method of any of claims 8-14, wherein the optical coupler is formed by direct laser writing manner or an imprint process.
